# EUROPÄISCHE PATENTSCHRIFT

(11) **EP 1 479 735 B1**
(45) Veröffentlichungstag und Bekanntmachung des Hinweises auf die Patenterteilung: **28.12.2005**
(21) Anmeldenummer: 04008820.5
(22) Anmeldetag: 14.04.2004
(51) Int. Cl.: C09D 5/00, C09D 129/04, B65F 1/00

(54) **Beschichtung und Beutel**
Coating and bag
Revêtement et sac

(30) Priorität: 19.05.2003 DE 20307771 U
(43) Veröffentlichungstag der Anmeldung: 24.11.2004
(73) Patentinhaber: Cofresco Frischhalteprodukte GmbH & Co. KG, 32427 Minden (DE); MELITTA HAUSHALTSPRODUKTE GmbH & Co. Kommanditgesellschaft, 32427 Minden (DE)
(72) Erfinder: Arning, Hans-Jürgen, Dr., 32312 Lübbecke (DE); Neukirch, Michael, 51503 Rösrath (DE); Meier, Frank, 32425 Minden (DE)
(74) Vertreter: Dantz, Jan Henning

(56) Entgegenhaltungen:
- WO-A-97/38852
- JP-A- 10 007 824

## Beschreibung

Die vorliegende Erfindung betrifft eine Beschichtung, insbesondere für Folien sowie einen Beutel, der als Müllbeutel ausgebildet sein kann.

Es gibt Folien, die beispielsweise zu einem Müllbeutel verarbeitet werden, um Hausmüll aufzunehmen. Solche Müllbeutel bestehen aus einem wasserundurchlässigen Material und verhindern somit ein Austreten von flüssigen Verschmutzungen. Es ist dabei möglich, die Innenseite des Müllbeutels mit einer Wirksubstanz gegen Bakterienwachstum oder mit Duftstoffen zu versehen. Eine solche Beschichtung besitzt jedoch den Nachteil, dass sie generell wirksam ist und auch dann ihre Wirkung entfaltet, wenn kein Bedarf vorhanden ist, beispielsweise weil kein Müll in dem Müllbeutel enthalten ist. Ferner unterliegt eine solche Beschichtung einer schnellen Alterung und die Wirksamkeit nimmt relativ schnell ab.

Aus der WO 97 /38852 ist ein Verpackungsmaterial mit einer Kunststofffolie bekannt, die eine Sauerstoffbarriere ausbildet. Die Kunststofffolie kann dabei mit einer organischen oder anorganischen Beschichtung versehen sein.

Die JP 10 007824 (EP 805 177) offenbart einen Gassperrfilm, der ein thermoplastisches Harzsubstrat mit einer Gassperrbeschichtung umfasst, wobei die Beschichtung ein wasserlösliches oder wasserdispergierbares Hochpolymer und anorganische geschichtete Teilchen umfasst. Dadurch wird ein hohes Gassperrvermögen erhalten.

Es ist daher Aufgabe der vorliegenden Erfindung eine Beschichtung und einen Beutel zu schaffen, mittels der Wirkstoffe erst bei Bedarf freigesetzt oder aktiviert werden.

Diese Aufgabe wird mit einer Beschichtung für Folien gelöst, die eine Gassperre ausbildet und bei Kontakt mit Wasser oder Luft mit einer bestimmten Luftfeuchtigkeit auf- oder angelöst wird, um einen in oder unter der Beschichtung angeordneten Wirkstoff freizusetzen oder zu aktivieren.

Der Wirkstoff kann damit solange in oder unter der Beschichtung eingekapselt gehalten werden, bis dessen Freisetzung oder Aktivierung gewünscht wird, wobei dann durch Kontakt mit Wasser oder durch Zusammenwirken von Luft mit vergleichsweise hoher Luftfeuchtigkeit die Beschichtung auf- oder angelöst wird und somit die Gassperre der Beschichtung überwunden wird. Diese automatisch ablaufende Reaktion kann unabhängig vom Benutzer erfolgen. Durch die Gassperreigenschaft der Beschichtung wird eine vorzeitige Freigabe des Wirkstoffes, beispielsweise des flüchtigen Wirkstoffes verhindert.

Der Wirkstoff kann dabei als Duftstoff ausgebildet sein, der sich bei Auflösung der Beschichtung verflüchtigt.

Gemäß einer bevorzugten Ausführungsform der Erfindung weist die Beschichtung ein wasserlösliches Polymer auf. In ein solches wasserlösliches Polymer, beispielsweise Polyvinylalkohol lassen sich antibakterielle Wirkstoffe oder Duftstoffe gut einlagern und die Beschichtung lässt sich kostengünstig herstellen. Die Beschichtung kann beispielsweise mehr als 50 % Polyvinylalkohol enthalten und zusätzlich einen Duftstoff oder einen antibakteriellen Wirkstoff.

Vorzugsweise liegt die zur Aktivierung der Beschichtung notwendige Luftfeuchte in einem Bereich zwischen 60 % und 90 % relative Luftfeuchte. Gerade bei Verwendung der Beschichtung in einem Müllbeutel wird eine entsprechende deodorierende Wirkung erst dann erforderlich, wenn Gärprozesse stattfinden und die Luftfeuchte innerhalb des Müllbeutels etwas höher ist.

Vorzugsweise weist die Beschichtung zwei Einzelschichten auf, in denen Wirkstoffe enthalten sind, die bei Auflösung der Einzelschichten miteinander reagieren.

Vorzugsweise wird die Beschichtung bei einem Beutel mit einer Schicht aus einem wasserundurchlässigen Trägermaterial eingesetzt.

Erfindungsgemäß wird ferner ein Beutel, insbesondere Müllbeutel, bereitgestellt, der eine Schicht aus einem wasserundurchlässigen Trägermaterial sowie eine vorstehend beschriebene Beschichtung aufweist. Die Beschichtung ist vorzugsweise an der Innenseite des Beutels angeordnet und wird über die im Beutel herrschende Atmosphäre reaktiviert.

Die Erfindung wird nachfolgen anhand von mehreren Ausführungsbeispielen mit Bezug auf die beigefügten Zeichnungen näher erläutert. Es zeigen:
- Figur 1: eine schematische Ansicht eines ersten Ausführungsbeispiels einer erfindungsgemäßen Beschichtung und
- Figur 2: eine schematische Ansicht eines zweiten Ausführungsbeispiels einer erfindungsgemäßen Beschichtung.

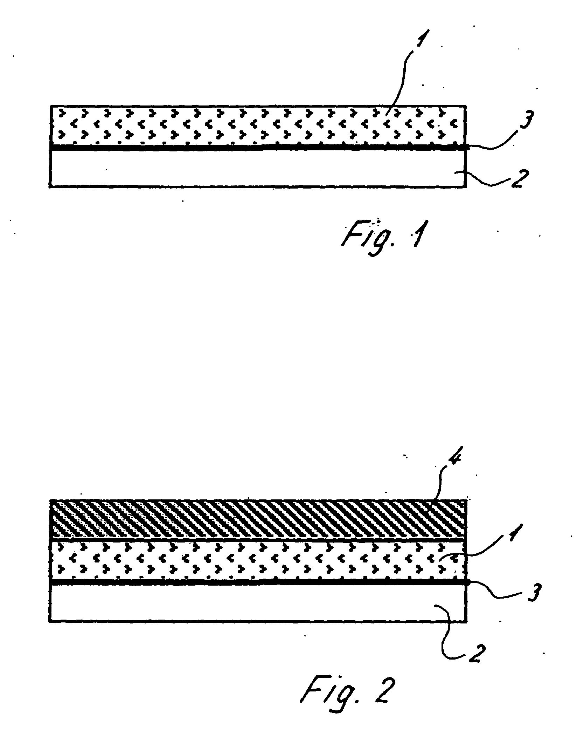

In Figur 1 ist schematisch eine Beschichtung 1 gezeigt, die auf einer Trägerschicht 2 aufgebracht ist, die als Folie, Wandung eines Behälters oder eines anderen Gegenstandes ausgebildet sein kann. Vorzugsweise ist die Trägerschicht aus einer nicht wasserempfindlichen Schicht, beispielsweise aus Polyethylen, Aluminium oder anderen Materialien hergestellt. Sofern die Beschichtung 1 und die Trägerschicht 2 unverträglich zueinander sind, ist ein Haftvermittler oder Kleber 3 dazwischen vorgesehen.

Beim Einwirken von Feuchtigkeit auf die Beschichtung 1 in Form von Flüssigkeit oder einer hohen Luftfeuchtigkeit von beispielsweise über 60 % wird die Beschichtung 1 auf- oder angelöst und in der Beschichtung 1 enthaltene Wirkstoffe freigesetzt. Die Beschichtung kann beispielsweise bei einem Müllbeutel eingesetzt werden, wobei in der Beschichtung dann Geruchsstoffe, Geruchsabsorber und/oder antibakterielle Wirkstoffe eingelagert sind, die durch die Auf- oder Anlösung der Beschichtung freigesetzt werden. Im Ergebnis würden dann in dem Müllbeutel störende Verderbnisgerüche reduziert, überlagert oder vermieden.

Es ist auch möglich, die Beschichtung 1 als Lebensmittelverpackung einzusetzen, beispielsweise damit eine antibakterielle Wirkung eines Wirkstoffes in der Beschichtung 1 erst nach dem Verpacken der Lebensmittel in entsprechende Behälter oder Folien erfolgt.

Ferner ist es möglich, dass durch den Einfluss von Wasser oder Feuchtigkeit eine chemische Reaktion des Wirkstoffes eingeleitet wird, beispielsweise könnte hierbei Wärme erzeugt werden, die Lebensmittel vor dem Verzehr aufheizt oder ein spezielles Gas, beispielsweise CO₂ entwickelt wird, das die Entwicklung bestimmter Mikroorganismen hemmt.

Nachfolgend werden einige Ausführungsbeispiele für die Zusammensetzung der Beschichtung 1 beschrieben:

### 1. Ausführungsbeispiel

70 bis 90 % eines thermoplastischen wasserlöslichen Polymers, beispielsweise Polyvinylalkohol (PVOH) wird mit 10 bis 30 % eines antibakteriellen Wirkstoffen, wie Triclosan ®-Masterbatch von den Firmen Sanitized ® oder Cognis ® gemischt. Die Beschichtung wird durch bekannte Verfahren, wie durch Co-Extrusion, Lackieren, Besprühen oder Bedrucken auf eine Folie aus Polyethylen aufgebracht. Bei hoher Feuchtigkeit oder einem Kontakt mit Wasser wird der antibakterielle Wirkstoff nach und nach freigesetzt und hemmt damit das Wachstum von Bakterien. Die Folie kann beispielsweise zu einem Müllbeutel geformt sein.

### 2. Ausführungsbeispiel

Es wird eine Mischung aus 60 bis 95 % thermoplastischem PVOH und 5 bis 40 % eines äquimolaren Gemisches mit den Komponenten Natriumhydrogencarbonat (NaHCO₃) und Zitronensäure hergestellt. Durch Einwirkung von Wasser auf diese Schicht wird beim Eindringen desselben in die Folie CO₂ freigesetzt. Hierdurch wird ebenfalls das Wachstum von aeroben Bakterien gehemmt und diese Beschichtung lässt sich beispielsweise bei Lebensmittelverpackungen in Verbindung mit Folien oder Behältern verwenden.

### 3. Ausführungsbeispiel

Eine Mischung aus 70 bis 95 % thermoplastischem PVOH und 5 bis 30 % eines mikroverkapselten Duftstoffes, beispielsweise eines ätherischen Öls, wobei das Verkapselungsmaterial ebenfalls wasserlöslich sein sollte und beispielsweise aus Stärke oder Gelatine besteht, werden als Beschichtung aufgetragen. Durch die Einwirkung von Wasser werden die Duftstoffe sukzessive freigesetzt, so dass beispielsweise ein Müllgeruch innerhalb eines Müllbeutels überlagert werden kann.

### 4. Ausführungsbeispiel

Es wird eine Mischung aus 70 bis 95 % thermoplastischem PVOH und 5 bis 30 % eines absorbierenden Materials, beispielsweise Aktivkohlepulver, Zeolithe (Molekularsiebe) oder Cyclodextrine hergestellt. Das absorbierende Material wird nach Kontakt mit Wasser oder Feuchtigkeit aus der Beschichtung herausgelöst und es werden gezielt gasartige Verbindungen in einem Beutel absorbiert, damit diese geruchlich neutralisiert werden.

In Figur 2 ist ein weiteres Ausführungsbeispiel für eine Beschichtung gezeigt, die aus zwei Einzelschichten 1 und 4 besteht, die auf einer Trägerschicht 2 aufgebracht sind. Auch bei diesem Ausführungsbeispiel kann zwischen Trägerschicht 2 und der Einzelschicht 1 ein Haftvermittler 3 vorgesehen sein. Die Einzelschicht 1 wird erst freigegeben, wenn die wasserlösliche Schicht 4 aufgrund von Einwirkung von Feuchtigkeit oder Wasser auf- oder angelöst wird.

Die Einzelschicht 1 kann ähnlich wie bei den Ausführungsbeispielen 1 bis 4 aufgebaut sein, wobei die Konzentration des Wirkstoffes, beispielsweise Triclosan ®, Zitronensäure, Duftstoffkapseln etc. wesentlich höher sein könnte und auf eine wasserlösliche Matrix, beispielsweise durch PVOH, grundsätzlich ganz verzichtet werden könnte, da die Einzelschicht 4 eine temporäre Schutzschicht darstellt.

Als wasserlösliche Komponenten bieten sich idealerweise bekannte Materialien, wie Polyvinylalkohol, Cellulosederivate, Stärke, Gelatine usw. an. Die Wandstärken orientieren sich an den technischen Möglichkeiten und dem vorgesehenen Verwendungszweck, bei Folien liegt dieser Bereich bei wenigen Mikrometern, Behälterwände bei Dosen, Boxen usw. können durchaus einige Millimeter dick sein.

Es ist auch möglich, dass in den Einzelschichten 1 und 4 zwei reagierende, ansonsten unverträgliche Stoffe eingelagert sind, die erst nach Auflösung der Matrixmaterialien miteinander in Kontakt kommen und danach in gewünschter Weise miteinander reagieren.

## Patentansprüche

1. Beschichtung für Folien, die eine Gassperre ausbildet und bei Kontakt mit Wasser oder Luft mit einer bestimmten Luftfeuchtigkeit auf- oder angelöst wird, um einen in oder unter der Beschichtung (1, 4) angeordneten Wirkstoff freizusetzen oder zu aktivieren.

2. Beschichtung nach Anspruch 1, **dadurch gekennzeichnet, dass** die Beschichtung ein wasserlösliches Polymer aufweist.

3. Beschichtung nach Anspruch 1 oder 2, **dadurch gekennzeichnet, dass** der Wirkstoff als Duftstoff ausgebildet ist, der sich bei Auflösung der Beschichtung verflüchtigt.

4. Beschichtung nach einem der Ansprüche 1 bis 3, **dadurch gekennzeichnet, dass** die Beschichtung mehr als 50 % Polyvinylalkohol enthält.

5. Beschichtung nach einem der Ansprüche 1 bis 4, **dadurch gekennzeichnet, dass** die Beschichtung einen antibakteriellen Wirkstoff enthält.

6. Beschichtung nach einem der Ansprüche 1 bis 5, **dadurch gekennzeichnet, dass** die zur Aktivierung der Beschichtung notwendige Luftfeuchte in einem Bereich zwischen 60 % bis 90 % liegt.

7. Beschichtung nach einem der Ansprüche 1 bis 6, **dadurch gekennzeichnet, dass** die Beschichtung zwei Einzelschichten aufweist, in denen Wirkstoffe enthalten sind, die bei Auflösung der Einzelschichten miteinander reagieren.

8. Beutel mit einer Schicht aus einem wasserundurchlässigen Trägermaterial, **dadurch gekennzeichnet, dass** eine Beschichtung nach einem der vorhergehenden Ansprüche an dem Beutel vorgesehen ist.

9. Beutel nach Anspruch 8, **dadurch gekennzeichnet, dass** die Beschichtung an der Innenseite des Beutels angeordnet ist.

## Claims

1. Coating for foils which forms a gas barrier and on contact with water or air with a certain humidity is dispersed or solvated, in order to activate or liberate an active ingredient arranged in or under the coating (1, 4).

2. Coating according to Claim 1, **characterized in that** the coating comprises a water-soluble polymer.

3. Coating according to Claim 1 or 2, **characterized in that** the active ingredient has been designed as an odorant which volatilizes during dispersion of the coating.

4. Coating according to any of Claims 1 to 3, **characterized in that** the coating comprises more than 50% of polyvinyl alcohol.

5. Coating according to any of Claims 1 to 4, **characterized in that** the coating comprises an antibacterial active ingredient.

6. Coating according to any of Claims 1 to 5, **characterized in that** the humidity needed to activate the coating is in the range from 60% to 90%.

7. Coating according to any of Claims 1 to 6, **characterized in that** the coating has two individual layers which comprise active ingredients which react with one another on dispersion of the individual layers.

8. Bag with a layer composed of a water-impermeable substrate material, **characterized in that** a coating according to any of the preceding claims has been provided on the bag.

9. Bag according to Claim 8, **characterized in that** the coating has been arranged on the inner side of the bag.

## Revendications

1. Revêtement pour feuilles, qui réalise une barrière à gaz et qui en cas de contact avec l'eau ou l'air, d'une humidité déterminée, est dissous totalement ou en partie, afin de dégager ou d'activer une substance active disposée dans ou sous le revêtement (1, 4).

2. Revêtement selon la revendication 1, **caractérisé en ce que** le revêtement contient un polymère soluble dans l'eau.

3. Revêtement selon la revendication 1 ou 2, **caractérisé en ce que** la substance active est une substance aromatique qui se volatilise lors de la dissolution du revêtement.

4. Revêtement selon l'une des revendications 1 à 3, **caractérisé en ce que** le revêtement contient plus de 50 % d'alcool de polyvinyle.

5. Revêtement selon l'une des revendications 1 à 4, **caractérisé en ce que** le revêtement contient une substance active antibactérienne.

6. Revêtement selon l'une des revendications 1 à 5, **caractérisé en ce que** pour activer le revêtement l'humidité nécessaire de l'air se situe entre 60 % et 90 %.

7. Revêtement selon l'une des revendications 1 à 6, **caractérisé en ce que** le revêtement comporte deux couches individuelles qui contiennent des substances actives lesquelles réagissent entre elles lors de la dissolution des couches individuelles.

8. Sac avec une couche d'un matériau de support imperméable à l'eau, **caractérisé en ce qu'**il est prévu sur le sac un revêtement selon l'une des revendications précédentes.

9. Sac selon la revendication 8, **caractérisé en ce que** le revêtement est disposé sur la face intérieure du sac.
